# NOUVEAU FASCICULE DE BREVET EUROPEEN

(11) **EP 1 852 638 B2**
(45) Date de publication et mention de la décision concernant l'opposition: **20.01.2016**
(45) Mention de la délivrance du brevet: 18.03.2009
(21) Numéro de dépôt: 07008929.7
(22) Date de dépôt: 03.05.2007
(51) Int. Cl.: F16J 15/08

(54) **Joint métallique comportant une surépaisseur formée de protubérances à motifs intersectés**
Metalldichtung mit einem Aufmaß, das aus Zwischenabschnitt-Höckern gebildet wird
Metallic gasket comprising a thicker section made up of protuberances with intersecting patterns

(30) Priorité: 04.05.2006 FR 0651613
(43) Date de publication de la demande: 07.11.2007
(73) Titulaire: ElringKlinger AG, 72581 Dettingen (DE)
(72) Inventeur: Burg, Pascal, 87150 Saint-Gence (FR)
(74) Mandataire: Hoeger, Stellrecht & Partner Patentanwälte mbB

(56) Documents cités:
- EP-A- 1 298 364
- EP-A- 1 577 589
- EP-A1- 0 493 953
- JP-A- H10 339 372
- US-A- 4 861 047

## Description

La présente invention se rapporte à un joint selon le préambule de la revendication 1, spécialement à un joint métallique, notamment à un joint de culasse.

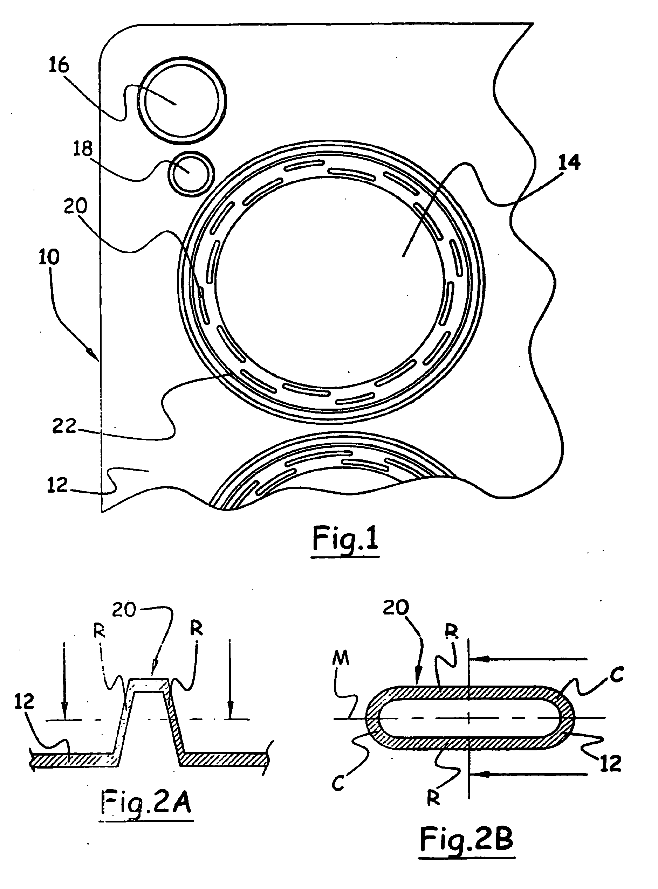

Comme illustré en figure 1, un joint 10 de culasse, disposé entre un bloc moteur et une culasse, comprend généralement une ou plusieurs feuilles métalliques ou tôles 12 comportant des ouvertures 14 susceptibles de coopérer avec les chambres de combustion et des orifices 16 permettant le passage de fluides et des orifices 18 permettant le passage des moyens de serrage tels que des tiges filetées (voir également EP-A-1 298 364).

Un joint 10 de culasse pour assurer l'étanchéité entre un bloc moteur et une culasse, dispose d'au moins une tôle 12 comprenant des moyens d'étanchéité, notamment au moins une nervure 22, entourant chacune desdites ouvertures 14.

De manière connue, un joint métallique de culasse comprend des moyens d'étanchéité pour une ouverture, notamment un ensemble de deux nervures entourant l'ouverture, ledit ensemble comprenant une nervure infinie et une nervure avec deux extrémités noyées dans le corps de la nervure infinie (voir EP-A-0 493 953).

Pour assurer une étanchéité dite dynamique en périphérie des ouvertures 14 coopérant avec la chambre de combustion, ladite nervure 22 doit s'écraser de manière élastique lors des déformations subies par les composants assemblés. Un joint 10 dynamique, c'est-à-dire susceptible de s'adapter aux déformations et aux dilatations des composants assemblés, notamment un bloc moteur et une culasse se déformant lors de chaque cycle d'utilisation du moteur, dispose de limiteurs d'écrasement pour éviter une déformation plastique de ladite nervure 22 d'étanchéité. Dans le cas où les protubérances sont disposées hors zone gaz, elles limitent alors la déformation de la culasse. Ces limiteurs d'écrasement peuvent être réalisés par une surépaisseur, notamment au moins une protubérance 20, disposée à proximité de ladite nervure 22 d'étanchéité, sur la même tôle 12 ou sur au moins une tôle 12 juxtaposée. Généralement, ladite surépaisseur est disposée sur des cercles sensiblement concentriques aux ouvertures 14 autour desquelles circule ladite nervure 22 d'étanchéité.

De manière connue et comme illustré sur les figures 2A et 2B, le joint 10 comprend au moins une surépaisseur formant butée, cette surépaisseur étant généralement constituée d'au moins une protubérance 20, protubérance réalisée par déformation plastique par emboutissage de la tôle 12 et formant ainsi une déformation en creux d'un côté de ladite tôle 12 et une déformation en saillie de l'autre côté. L'emboutissage, réalisé de manière à ce que la paroi latérale de ladite protubérance 20 soit fermée, engendre une épaisseur de la protubérance 20 au niveau de sa paroi latérale sensiblement plus faible que l'épaisseur initiale de la tôle 12 en raison de l'étirement de la matière, la partie supérieure demeurant d'épaisseur sensiblement égale à l'épaisseur initiale de la tôle 12.

D'autre part, dans l'assemblage d'un bloc moteur avec une culasse, les moyens de serrage, notamment des tiges filetées, ne peuvent appliquer une pression de serrage uniformément répartie sur toute la surface de contact entre ledit bloc moteur et la culasse, la pression des efforts de serrage étant notamment plus élevée à proximité des orifices 18 destinés au passage des moyens de serrage qu'au niveau des côtés latéraux ou des coins du joint 10. Il est donc prévu des éléments similaires aux limiteurs d'écrasement, réalisés de la même façon par des surépaisseurs, mais disposés dans la zone dite hors gaz, à l'extérieur des nervures 22, pour assurer une répartition optimale des efforts de serrage sur toute la surface du joint 10. Ces moyens de répartition des efforts de serrage sont donc réalisés dans au moins une tôle 12 composant le joint 10 et sous la forme de surépaisseurs disposées en surface dudit joint.

Ces limiteurs d'écrasement et ces moyens de répartition des efforts de serrage sont donc des surépaisseurs produites par emboutissage d'au moins une tôle 12, avec chacune d'un côté de ladite tôle une forme en creux et de l'autre côté de ladite tôle une forme en saillie formant une protubérance 20.

Lors de l'utilisation d'un moteur disposant d'un joint 10 équipé de limiteurs d'écrasement et/ou de moyens de répartition, un phénomène de « fretting » peut apparaître, consistant en des mouvements relatifs entre les deux pièces assemblées, mouvements pouvant s'effectuer selon des directions multiples mais avec de très faibles amplitudes et de très hautes fréquences, ledit phénomène s'amplifiant notamment lors de l'usure des moyens de serrage et d'amortissement des vibrations.

Le « fretting » a des conséquences immédiates sur l'assemblage et notamment sur l'étanchéité des joints situés au niveau dudit assemblage pour en assurer l'étanchéité. Les surépaisseurs dont dispose le joint 10 en tant que limiteurs d'écrasement ou moyens de répartition des efforts de serrage subissent les vibrations et perdent peu à peu leur rigidité et leur résistance mécanique. Dès lors, lesdites surépaisseurs ne peuvent remplir pleinement leurs fonctions. D'une part, les efforts de serrage se trouvent de nouveau inégalement répartis en raison d'une diminution de la rigidité des surépaisseurs dans certaines zones du joint 10. D'autre part, l'étanchéité dynamique ne peut plus être garantie par des limiteurs d'écrasement dont la résistance mécanique diminue peu à peu, engendrant ainsi des risques de déformation plastique de la (ou des) nervure(s) 22 d'étanchéité.

Aussi, selon un premier objectif, la présente invention vise à pallier les inconvénients de l'art antérieur en améliorant la répartition des efforts de serrage et l'efficacité des limiteurs d'écrasement en augmentant leur rigidité.

Selon un deuxième objectif, la présente invention permet de limiter les effets d'usure et de fatigue causés par les vibrations à directions multiples issues du « fretting » et subis par le joint au niveau de ses limiteurs d'écrasement et de ses moyens de répartition des efforts de serrage, ainsi que par les deux surfaces à étancher.

A cet effet, l'invention a pour objet un joint selon la revendication 1.

D'autres caractéristiques et avantages ressortiront de la description qui va suivre de l'invention, description donnée à titre d'exemple uniquement, en regard des dessins annexés sur lesquels ;
- la figure 1 est une représentation d'un joint disposant de surépaisseurs selon l'art antérieur ;
- les figures 2A et 2B sont deux vues en coupe d'une protubérance selon l'art antérieur ;
- la figure 3 est une représentation d'un joint disposant de surépaisseurs selon l'invention ;
- les figures 4A et 4B illustrent les différences entre des motifs non intersectés et des motifs intersectés ;
- la figure 5 représente un exemple d'une première variante des motifs intersectés ;
- la figure 6 représente un exemple d'une deuxième variante des motifs intersectés;
- la figure 7 représente un exemple d'une troisième variante des motifs intersectés;
- la figure 8 illustre l'utilisation de protubérances en croix à orientations différentes.

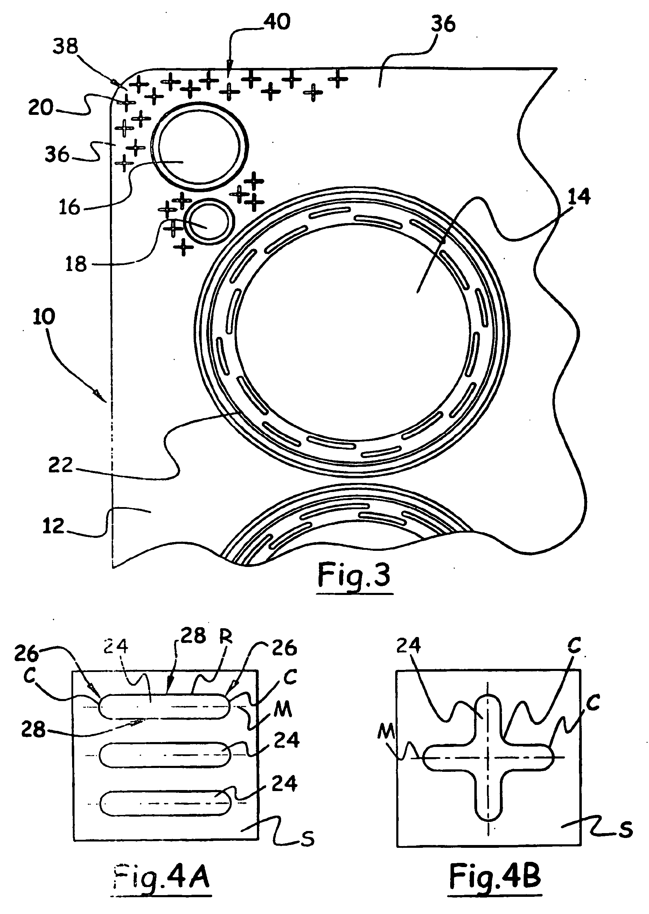

Sur la figure 3, on a représenté en 10 un joint selon l'invention, susceptible d'être intercalé entre les surfaces d'un premier et d'un deuxième élément à étancher, par exemple une culasse et un bloc moteur dans le cas d'un joint de culasse. Bien entendu, l'invention n'est pas limitée à cette application et couvre au contraire toutes les applications nécessitant un joint sensiblement plat.

Le joint 10 comprend au moins une feuille ou plaque, appelée tôle 12, de préférence métallique, revêtue ou non.

Le joint 10 comprend au moins une ouverture et/ou orifice de manière à faire communiquer des conduits débouchant respectivement au niveau de chaque surface des éléments à étancher. Dans le cas d'un joint de culasse, le joint 10 comprend au moins une ouverture 14 susceptible de coopérer avec une chambre de combustion, des orifices 16 permettant le passage de fluides, et des orifices 18 destinés au passage des moyens de serrage tels que des tiges filetées.

De manière connue, le joint 10 comprend au moins une surépaisseur formant butée, cette surépaisseur étant généralement constituée d'au moins une protubérance 20. La suite de la description est faite pour un joint 10 dont au moins une tôle 12 comprend au moins une surépaisseur constituée de plusieurs protubérances 20, au moins deux, car les améliorations apportées par la présente invention ont d'autant plus d'intérêts que l'on utilise plusieurs protubérances 20 selon l'invention. Cependant, l'invention couvre aussi le cas dans lequel une seule protubérance 20 utilisant lesdites améliorations est utilisée pour la réalisation d'au moins une surépaisseur disposée sur au moins une tôle 12 du joint 10.

De manière plus précise, l'invention se propose d'apporter une amélioration auxdites protubérances 20 notamment en augmentant leurs résistances à l'écrasement, lesdites protubérances 20 étant utilisées sur un joint 10 situé entre les surfaces d'éléments à étancher. Cette amélioration augmente ainsi sensiblement la pression devant être exercée par les moyens de serrage pour effectuer l'assemblage et le maintien en position des éléments à étancher. L'augmentation des efforts d'opposition aux moyens de serrage obtenue par une augmentation de la résistance à l'écrasement des protubérances 20 rigidifie ainsi l'assemblage entre les surfaces des éléments à étancher. Cette rigidification accrue de l'assemblage ayant pour but de limiter plus efficacement les effets d'usure et de fatigue causés par les vibrations à directions multiples issues du « fretting » sur lesdites surfaces des éléments à étancher.

De plus, la possibilité d'obtenir des protubérances 20 de plus grande résistance à l'écrasement permet aussi aux concepteurs des éléments à étancher, notamment un bloc cylindre et une culasse, d'assurer une meilleure répartition des efforts de serrage. En effet, disposant d'un plus grand panel de protubérances de différentes valeurs de résistances à l'écrasement, les concepteurs du joint 10 peuvent d'autant mieux adapter la rigidité de certaines zones dudit joint, la répartition des rigidités des surépaisseurs étant fonction d'une cartographie de la rigidité du joint 10 établie à partir de chacune des conceptions possibles des surfaces des éléments à étancher, de la disposition des orifices 18 destinés au passage des moyens de serrage et des nervures d'étanchéité 22, ainsi que des déformations prévues des surfaces des éléments à étancher sous l'effet des montées en température et des dilatations.

On note cependant une différence de résistance à l'écrasement entre les parties rectilignes, référencées R sur les figures 2A et 2B, de la paroi latérale d'une protubérance 20 et les parties curvilignes, dites concaves ou convexes et référencées C sur la figure 2B, de ladite paroi latérale. Ainsi, les parties rectilignes R de la paroi latérale offrent une résistance à l'écrasement sensiblement plus faible que les parties C convexes ou concaves.

Une protubérance 20 dispose généralement d'un motif 24 de base, correspondant sensiblement à la forme de l'outil d'emboutissage, plus long que large, pour donner un ordre d'idées, si le motif a une longueur de 5 millimètres, sa largeur se situera entre 0.3 et 0.5 millimètre.

Pour la suite de la description, un motif 24 se définit par un contour fermé illustré sur la figure 4A, plus long que large, disposant d'au moins deux parties curvilignes C situées de part et d'autre de la longueur dudit motif. Les extrémités 26 d'un motif 24 plus long que large désignent les parties latérales situées de part et d'autre de la longueur dudit motif 24, le corps 28 désigne la partie située entre les extrémités 26 dudit motif 24 de part et d'autre de sa largeur.

La direction d'un motif 24 est donnée par son axe médian M, ledit axe médian M étant représenté en figures 2B et 4A.

Selon les variantes, l'axe médian M peut être rectiligne ou courbe.

Selon l'invention, comme illustré en figure 3, un joint 10 comprend au niveau d'au moins une tôle 12, au moins une surépaisseur formant butée constituée d'au moins une protubérance 20 consistant en l'intersection d'au moins deux motifs 24 plus longs que larges. La protubérance 20 est obtenue par déformation plastique par emboutissage de ladite tôle 12 avec d'un côté de la tôle 12 une déformation en creux et de l'autre côté de la tôle 12 une déformation en saillie.

Plus précisément, une protubérance 20 consiste en une partie de tôle déformée en saillie par rapport à la surface de la tôle non déformée et de contour fermé formé par l'intersection d'au moins deux motifs 24 plus longs que larges.

La réalisation d'une protubérance 20 à l'aide d'au moins deux motifs 24 plus longs que larges intersectés permet de multiplier les parties C concaves ou convexes de ladite protubérance 20 ainsi que sa rigidité. Les parties C concaves ou convexes sont des zones de forte résistance à l'écrasement, premièrement, en raison de la courbure de la paroi latérale de ladite protubérance 20 au niveau desdites parties C concaves ou convexes et deuxièmement, en raison de la raideur accrue de la tôle déformée formant ladite protubérance par rapport à la raideur de la tôle non déformée.

Par comparaison et comme illustré sur les figures 4A et 4B, une même surface S de joint 10 comprenant des protubérances 20 à motifs 24 intersectés comprend plus de parties C curvilignes que la même surface S du joint 10 occupée par des motifs 24 identiques mais sans intersection, sensiblement parallèles. Ainsi, pour une surface S de joint contenant trois motifs 24 non intersectés, chaque motif 24 comprenant deux parties C curvilignes, notamment convexes, on constate six parties C curvilignes de plus grande résistance à l'écrasement alors qu'en disposant seulement deux de ces mêmes motifs 24 sur la même surface S du joint 10 mais avec intersection, on dispose de huit parties C curvilignes de forte résistance à l'écrasement. Donc, pour une même surface S de joint, on obtient une surépaisseur de rigidité plus élevée avec des motifs 24 intersectés que celle obtenue avec des motifs 24 non intersectés et un nombre inférieur de motifs.

Selon une première disposition, les protubérances 20 distinctes à motifs 24 intersectés sont disposées le long d'un axe avec au moins une portion rectiligne.

Selon une deuxième disposition, les protubérances 20 distinctes à motifs 24 intersectés sont disposées le long d'un axe avec au moins une portion curviligne.

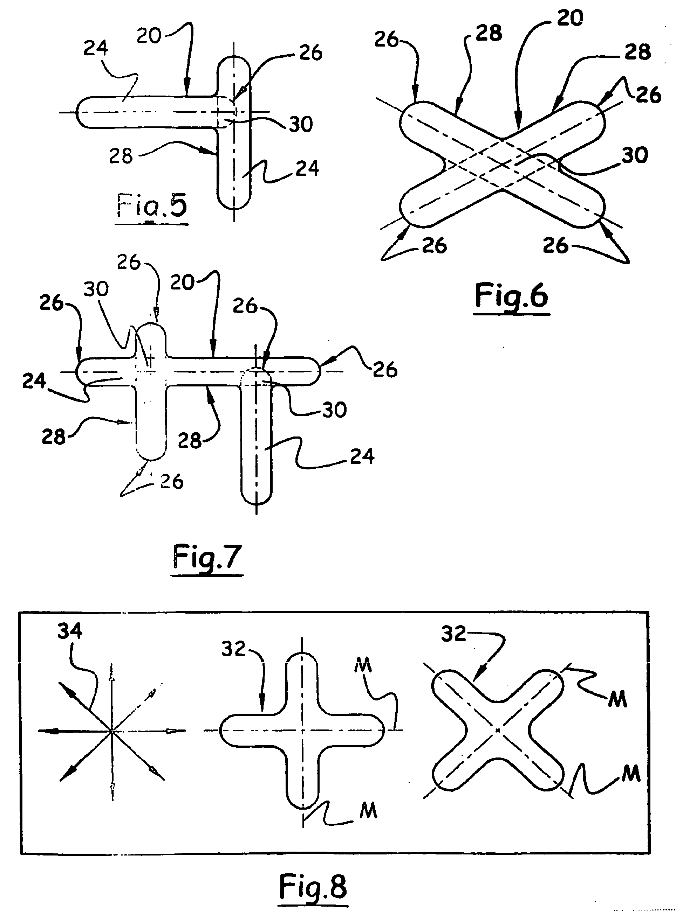

Selon une première variante des motifs 24 intersectés, dont un exemple est représenté en figure 5, une protubérance 20 comprend au moins une intersection d'un corps 28 de motif avec une extrémité 26 d'au moins un autre motif 24, ladite extrémité 26 se retrouvant noyée dans ledit corps 28 de motif 24.

Selon une deuxième variante des motifs 24 intersectés, dont un exemple est représenté en figure 6, une protubérance 20 comprend au moins une intersection d'un corps 28 de motif 24 avec le corps 28 d'au moins un autre motif 24, lesdits motifs 24 étant intersectés corps à corps, toutes leurs extrémités 26 dépassant sensiblement desdits corps 28.

Selon une troisième variante des motifs 24 intersectés, dont un exemple est représenté en figure 7, une protubérance 20 comprend une combinaison :
- d'au moins une intersection d'un corps 28 de motif 24 avec une extrémité 26 d'au moins un autre motif 24, ladite extrémité 26 se retrouvant noyée dans ledit corps 28 de motif 24, et/ou ;
- d'au moins une intersection d'un corps 28 de motif 24 avec le corps 28 d'au moins un autre motif 24, lesdits motifs 24 étant intersectés corps à corps, leurs extrémités 26 dépassant sensiblement desdits corps 28.

La valeur de l'angle entre les directions, données par les axes médians M, d'au moins deux motifs 24 constituant une intersection peut prendre toutes les valeurs voulues, du moment que l'intersection desdits motifs 24 permet de créer des parties curvilignes C supplémentaires pour la réalisation d'une protubérance 20 à rigidité accrue.

L'orientation donnée aux directions des motifs 24 intersectés influe directement sur les directions de reprise des vibrations et donc de rigidification. Selon la conception des éléments ou des surfaces à étancher, les concepteurs choisissent l'orientation des motifs la plus apte à absorber lesdites vibrations, simultanément et de la même manière que pour la répartition des protubérances 20 sur le joint 10, en fonction d'une cartographie de la rigidité du joint 10 établie à partir de chacune des conceptions possibles des surfaces des éléments à étancher, de la disposition des orifices 18 destinés aux moyens de serrage et des nervures d'étanchéité 22, ainsi que des déformations prévues des surfaces des éléments à étancher sous l'effet des montées en température et des dilatations.

Selon un mode de réalisation préférentiel d'une protubérance 20, l'invention utilise des protubérances 20 à intersection de seulement deux motifs 24 selon la deuxième variante de réalisation d'une intersection de motifs 24, à savoir, un corps 28 de motif 24 avec le corps 28 d'un autre motif 24, lesdits motifs 24 étant intersectés corps à corps, leurs extrémités 26 dépassant sensiblement desdits corps 28, et, de plus, les directions respectives des deux motifs 24, sensiblement rectilignes, sont séparées par un angle sensiblement droit. Ce mode de réalisation préférentiel d'une protubérance 20 est appelé protubérance en croix 32, ladite croix comprenant donc quatre branches.

En effet, afin d'éviter un trop grand étirement par emboutissage de la matière de la tôle 12 sur laquelle sont réalisées les protubérances 20 à rigidité accrue ou un accroissement de la zone d'intersection 30 des motifs 24 conduisant à un affaissement de ladite zone d'intersection 30, une protubérance 20 à motifs 24 intersectés doit comprendre un nombre limité de motifs 24 intersectés en une même zone d'intersection 30, deux de préférence selon l'invention. La zone d'intersection 30 est définie par la réunion des parties d'une protubérance 20 appartenant à au moins deux motifs 24 intersectés formant ladite intersection.

De plus, les parties C concaves ou convexes réalisées par l'intermédiaire d'au moins deux motifs 24 intersectés perdent leur plus grande résistance à l'écrasement par rapport aux parties R rectilignes lorsque l'angle entre les axes médians M des motifs 24 intersectés est sensiblement inférieur à un angle droit. Un angle, entre deux motifs 24 intersectés, sensiblement inférieur à un angle droit conduit en effet à une déformation de la tôle 12 susceptible de provoquer un pliage de la matière de ladite tôle 12, auquel cas ladite partie C curviligne, concave ou convexe, perd une partie de sa résistance à l'écrasement.

D'autre part, pour limiter la zone d'intersection 30 des motifs 24 intersectés mais aussi afin de mieux répartir la reprise des efforts dus aux vibrations en surface du joint 10, l'invention préfère la disposition de protubérances en croix 32 selon des orientations différentes, éventuellement autant de protubérances en croix 32 d'orientations différentes que peut le permettre la surface du joint 10, pour absorber lesdits efforts de vibration selon plusieurs axes, plutôt que la réalisation d'une protubérance 20 comprenant une multitude de branches, notamment plus de quatre.

Ainsi et comme illustré en figure 8, pour absorber les vibrations multidirectionnelles dues au « fretting », quadridirectionnelles pour cet exemple et illustrées par quatre double flèches 34, on associera au moins deux protubérances en croix 32, à quatre branches, dont les orientations diffèrent, c'est-à-dire dont l'angle entre la direction d'un des motifs 24 d'une protubérance en croix 32 avec la direction d'un des motifs 24 d'une autre protubérance en croix 32 est sensiblement non nul.

Avantageusement, on peut multiplier le nombre de protubérances en croix 32 de directions de motifs 24 différentes pour augmenter le nombre de directions d'absorption des vibrations, chaque protubérance en croix 32 absorbant des vibrations selon deux directions différentes, on couvre rapidement un grand nombre de directions différentes de vibrations. Une protubérance en croix 32, à quatre branches, étant susceptible d'absorber des vibrations dont les directions sont comprises dans des fourchettes angulaires englobant les directions sensiblement proches des directions données par les axes médians M de chacun des motifs 24 de ladite protubérance en croix 32, il est inutile de multiplier à l'infini le nombre de protubérances d'orientations différentes.

Selon une première disposition des protubérances 20 à motifs 24 intersectés, les dites protubérances 20 sont disposées en partie périphérique 36 du joint 10.

De manière préférentielle, les protubérances 20 à motifs 24 intersectés sont disposées en partie périphérique 36 du joint 10 mais plus particulièrement dans les coins 38 et sur les parties latérales 40 dudit joint, la localisation desdites protubérances 20 étant déterminée suivant la rigidité des éléments ou des surfaces à étancher, lesdites protubérances 20 permettant de réduire les déformations subies par les surfaces des éléments à étancher.

Selon une deuxième disposition des protubérances 20 à motifs 24 intersectés, les dites protubérances 20 sont disposées à proximité des orifices 18 de passage des moyens de serrage des surfaces des éléments à étancher, permettant ainsi une optimisation de la répartition des efforts de serrage.

Bien entendu, l'invention n'est pas limitée au mode de réalisation représenté et décrit ci-dessus, mais couvre toutes les variantes definies par les revendications.

## Revendications

1. Joint (10) susceptible d'être disposé entre des surfaces à étancher, comprenant au moins une ouverture et/ou orifice (14,16,18) de manière à faire communiquer des conduits débouchant respectivement au niveau de chaque surface à étancher, et au moins une feuille ou plaque, appelée tôle, ladite tôle (12) comprenant au moins une surépaisseur formant butée comportant au moins une protubérance (20) obtenue par déformation plastique par emboutissage de ladite tôle (12) avec d'un côté de la tôle (12) une déformation en creux et de l'autre côté de la tôle une déformation en saillie, **caractérisé en ce que** ladite au moins une protubérance consiste en une partie de tôle déformée en saillie par rapport à la surface de la tôle non déformée et de contour fermé formé par une combinaison d'au moins deux motifs (24) plus longs que larges, chaque motif se définit par un contour fermé d'au moins deux parties curvilignes (C) désignant extrémités (26) dudit motif situées de part et d'autre de la longueur dudit motif et un corps (28) désignant la partie située entre les parties curvilignes, et lesdits motifs étant intersectés afin de multiplier les parties (C) concaves ou convexes de la protubérance (20) ainsi obtenue, les parties (C) concaves ou convexes étant des zones de fortes résistances à l'écrasement en raison de la courbure de la paroi latérale de la protubérance (20) au niveau desdites parties (C) concaves ou convexes et de la raideur accrue de la tôle déformée formant ladite protubérance (20) par rapport à la raideur de la tôle non déformée.

2. Joint (10) selon la revendication 1, **caractérisé en ce qu'**au moins une protubérance (20) comprend au moins une intersection d'un corps (28) de motif (24) avec une extrémité (26) d'au moins un autre motif (24), ladite extrémité (26) se retrouvant noyée dans ledit corps (28) de motif (24).

3. Joint (10) selon l'une des revendications 1 ou 2, **caractérisé en ce qu'**au moins une protubérance (20) comprend au moins une intersection d'un corps (28) de motif (24) avec le corps (28) d'au moins un autre motif (24), lesdits motifs (24) étant intersectés corps à corps, toutes leurs extrémités (26) dépassant sensiblement desdits corps (28).

4. Joint (10) selon l'une des revendications 1 à 3, **caractérisé en ce que** ledit joint (10) comprend au moins une protubérance (20) formée par l'intersection de deux motifs (24), lesdits motifs (24) étant intersectés corps à corps, leurs extrémités (26) dépassant sensiblement desdits corps (28), les directions respectives des deux motifs (24) sont séparées par un angle sensiblement droit.

5. Joint (10) selon l'une des revendications 1 à 4, **caractérisé en ce que** les protubérances (20) distinctes à motifs (24) intersectés sont disposées le long d'un axe avec au moins une portion curviligne et/ou au moins une portion rectiligne.

6. Joint (10) selon l'une des revendications 1 à 5, **caractérisé en ce qu'**il comprend au moins une association de protubérances en croix (32), au moins deux, l'angle entre la direction d'un des motifs (24) d'une protubérance en croix (32) avec la direction d'un des motifs (24) d'une autre protubérance en croix (32) étant non nul pour augmenter le nombre de directions d'absorption des vibrations notamment dues au « fretting ».

## Patentansprüche

1. Dichtung, die dazu vorgesehen ist, zwischen abzudichtenden Flächen angebracht zu werden, zumindest eine Öffnung und/oder Bohrung (14, 16, 18) umfassend, um Kanäle, die jeweils in den Bereich einer jeden abzudichtenden Fläche einmünden, zu verbinden, und zumindest eine Folie oder Platte, die Blech genannt wird, wobei das besagte Blech (12) zumindest eine Verdickung umfasst, die einen Anschlag bildet, der zumindest einen Vorsprung (20) umfasst, erhalten durch plastisches Verformen durch Tiefziehen des besagten Bleches (12), mit einer hohlen Verformung auf einer Seite des Bleches (12) und einer überstehenden Verformung auf der anderen Seite des Bleches, **dadurch gekennzeichnet, dass** der besagte zumindest eine Vorsprung aus einem Teil des Bleches besteht, das im Verhältnis zur nicht verformten Fläche des Bleches überstehend verformt ist, mit einer geschlossenen Kontur, die gebildet wird durch eine Kombination von zumindest zwei Motiven (24), die länger als breit sind, wobei jedes Motiv definiert wird durch eine geschlossene Kontur von zumindest zwei gekrümmten Abschnitten (C), die Enden (26) des besagten Motivs bestimmen, die beiderseits der Länge des besagten Motivs angeordnet sind, und einem Korpus (28), der den Abschnitt bestimmt, der sich zwischen den gekrümmten Abschnitten befindet, und die besagten Motive sich schneiden, um die konkaven oder konvexen Abschnitte (C) des so erhaltenen Vorsprungs (20) zu vervielfachen, wobei die konkaven oder konvexen Abschnitte (C) aufgrund der gekrümmten Seitenwand des Vorsprungs (20) im Bereich der besagten konkaven oder konvexen Abschnitte (C) und der erhöhten Steifigkeit des verformten, den besagten Vorsprung (20) bildenden Bleches im Verhältnis zur Steifigkeit des unverformten Bleches, Zonen mit einer starken Stauchfestigkeit darstellen.

2. Dichtung (10) nach Anspruch 1, **dadurch gekennzeichnet, dass** mindestens ein Höcker (20) mindestens einen Schnittpunkt eines Körpers (28) eines Musters (24) mit einem Ende (26) mindestens eines anderen Musters (24) umfasst, wobei sich das Ende (26) in den Körper (28) des Musters (24) einbettet.

3. Dichtung (10) nach Anspruch 1 oder 2, **dadurch gekennzeichnet, dass** mindestens ein Höcker (20) mindestens einen Schnittpunkt eines Körpers (28) eines Musters (24) mit dem Körper (28) mindestens eines anderen Musters (24) umfasst, wobei sich die Muster (24) von Körper zu Körper schneiden, wobei alle ihre Enden (26) wesentlich über die Körper (28) hinausragen.

4. Dichtung (10) nach einem der Ansprüche 1 bis 3, **dadurch gekennzeichnet, dass** die Dichtung (10) mindestens einen Höcker (20) umfasst, der durch den Schnittpunkt von zwei Mustern (24) gebildet wird, wobei sich die Muster (24) von Körper zu Körper schneiden, wobei ihre Enden (26) wesentlich über die Körper (28) hinausragen und die jeweiligen Richtungen der beiden Muster (24) durch einen im Wesentlichen rechten Winkel getrennt sind.

5. Dichtung (10) nach einem der Ansprüche 1 bis 4, **dadurch gekennzeichnet, dass** die getrennten Vorsprünge (20) mit sich schneidenden Mustern (24) entlang einer Linie liegen, die mindestens einen gebogenen Abschnitt und/oder mindestens einen geraden Abschnitt hat.

6. Dichtung (10) nach einem der Ansprüche 1 bis 5, **dadurch gekennzeichnet, dass** sie mindestens eine Kombination von kreuzförmigen Vorsprüngen (32), und zwar mindestens zwei, umfasst, wobei der Winkel zwischen der Richtung eines der Muster (24) eines kreuzförmigen Höckers (32) und der Richtung eines der Muster (24) eines anderen kreuzförmigen Höckers (32) nicht null ist, um die Zahl von Richtungen, in denen Vibrationen, besonders Vibrationen aufgrund von Reibung, absorbiert werden können, zu erhöhen.

## Claims

1. Gasket (10) capable of being positioned between surfaces to be sealed, comprising at least one opening and/or orifice (14, 16, 18) in order to ensure communication between ducts respectively opening out at the level of each surface to be sealed, and at least one sheet or plate, referred to as a metal sheet, said metal sheet (12) comprising at least one thickening forming an abutment comprising at least one protrusion (20) obtained by plastic deformation by drawing said metal sheet (12) with a hollow deformation on one side of the metal sheet (12) and a protruding deformation on the other side of the metal sheet, **characterised in that** said at least one protrusion consists in a portion of deformed metal sheet protruding in relation to the surface of the non-deformed metal sheet and with a closed contour, formed by a combination of at least two patterns (24) greater in length than in width, each pattern is defined by a closed contour of at least two curvilinear portions (C) determining ends (26) of said pattern located on either side of the length of said pattern, and a body (28) indicating the portion located between the curvilinear portions, and said patterns being intersected in order to multiply the concave or convex portions (C) of the protrusion (20) thus obtained, the concave or convex portions (C) being areas of high crush-resistance due to the curvature of the side wall of the protrusion (20) at the level of said concave or convex portions (C) and due to the increased stiffness of the deformed metal sheet forming said protrusion (20) in relation to the stiffness of the non-deformed metal sheet.

2. Gasket (10) according to Claim 1, **characterized in that** at least one protuberance (20) comprises at least one intersection of a body (28) of a pattern (24) with an end (26) of at least one other pattern (24), the said end (26) becoming embedded in the said body (28) of the pattern (24).

3. Gasket (10) according to one of Claims 1 and 2, **characterized in that** at least one protuberance (20) comprises at least one intersection of a body (28) of a pattern (24) with the body (28) of at least one other pattern (24), the said patterns (24) intersecting body-to-body, with all their ends (26) extending appreciably from the said bodies (28).

4. Gasket (10) according to one of Claims 1 to 3, **characterized in that** the said gasket (10) comprises at least one protuberance (20) that is formed by the intersection of two patterns (24), the said patterns (24) intersecting body-to-body, their ends (26) extending appreciably from the said bodies (28), the respective directions of the two patterns (24) being separated by an angle that is more or less a right angle.

5. Gasket (10) according to one of Claims 1 to 4, **characterized in that** the separate protuberances (20) with intersecting patterns (24) lie along a line that has at least one curved portion and/or at least one straight portion.

6. Gasket (10) according to one of Claims 1 to 5, **characterized in that** it comprises at least one combination of cross-shaped protuberances (32), at least two, the angle between the direction of one of the patterns (24) of one cross-shaped protuberance (32) and the direction of one of the patterns (24) of another cross-shaped protuberance (32) being non-zero in order to increase the number of directions in which vibrations, particularly vibrations due to "fretting" can be absorbed.
